# EUROPEAN PATENT SPECIFICATION

(11) **EP 1 854 713 B1**
(45) Date of publication and mention of the grant of the patent: **19.10.2011**
(21) Application number: 07000629.1
(22) Date of filing: 12.01.2007
(51) Int. Cl.: B62M 25/04

(54) **Bicycle shifting mechanism**
Gangschaltung für ein Fahrrad
Dispositif de changement de vitesse pour bicyclette

(30) Priority: 10.05.2006 US 430863
(43) Date of publication of application: 14.11.2007
(73) Proprietor: SHIMANO INC., Osaka 590-8577 (JP)
(72) Inventor: Funai, Shingo, Sakai City, Osaka 590-8577 (JP)
(74) Representative: Tilmann, Max Wilhelm

(56) References cited:
- EP-A- 1 245 483
- EP-A- 1 440 878
- EP-A- 1 481 883
- EP-A- 1 652 768
- EP-A2- 0 361 335
- EP-A2- 0 647 557
- DE-A1- 19 915 336

## Description

### Field of the Invention

This invention generally relates to a bicycle shifting mechanism. More specifically, the present invention relates to a bicycle shifting mechanism that utilizes at least two positioning members during a wire releasing operation.

### Background Information

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle. In particular, control devices for shifting have been extensively redesigned in recent years.

Currently, there are many types of cable operated shifting devices currently being installed on bicycles. For example, some cable operated shifting devices have a pair of shift levers and a cable winding mechanism that rotates via a ratchet mechanism. With conventional cable operated shifting devices of this type, operation of one of the shift lever causes the cable winder to rotate via the ratchet mechanism in one direction by one gear at a time. As a result, the cable is wound around the cable winder, and a shift is made by the shift mechanism from one gear to the next gear. Operation of the other shift lever causes the ratchet mechanism to be released and the cable winder to rotate in the other direction by one gear at a time. As a result, the cable that was wound on the cable winder is played out, and a shift is made in the opposite direction by the shift mechanism.

More recently, some cable operated shifting devices have been developed that allow multiple gear shifts in a single operation of one of the shift levers. These prior shifting devices can be complicated and expensive to manufacture and assemble. Furthermore, these prior shifting devices are sometimes heavy and/or cumbersome.

From EP 1 245 483 A2 a bicycle shifting mechanism is known. This bicycle shifting mechanism has a winding pawl and an interrupting pawl. The winding pawl engages and disengages teeth of a winding latch arranged on a first latch plate. The interrupting pawl engages with an interrupting latch on a second latch plate during a release action. The winding pawl and the interrupting pawl do not hold the winding member in predetermined shift positions.

From DE 199 15 336 A1 a shift mechanism for a bicycle gear assembly is known having a detent element having a first detent nose and a second detent nose, the first detent nose being engagable with a first toothed segment and the second detent nose being engagable with a second tooth segment such that when one of the first and second detent noses is disengaged from the toothed segment an actuating part of the shift mechanism is turned by tensil forces of a tension cable of the shift mechanism. A release lever is operatively connected to the detent element for controlling the detent element.

From EP 1 440 878 A2 a position release mechanism for a bicycle control device is known that comprises a positioning unit that is adapted to be biased in a first direction. A positioning maintaining mechanism maintains the positioning unit in a plurality of predetermined positions, while a position release mechanism moves in a position releasing direction. The position releasing mechanism is operatively coupled to the positioning maintaining mechanism so that the positioning unit moves through at least two of the plurality of predetermined positions in the first direction in response to a progressive movement of the position releasing mechanism in the position releasing direction.

From EP 0 361 335 A2 A2 a position release mechanism for a bicycle control device according to the preamble of claim 1 is known, which has a claw-shaped first engaging member (a first moveable positioning member) that can hold the wire takeup member ("the winding member") in a predetermined shift position. The mechanism has further moveble positioning members, but these can not hold the wire take-up member in a predetermined shift position. This has to do with the interaction of an engaging projection which comes into contact with an extension portion so as to release the engagement between an second engaging member and a second engaging portion when the release lever returns to its home position. The second engaging member is thus not able to hold the winding member in a predetermined position, because as soon as the rider releases the release lever, the release lever returns to its home position due to an release lever spring and in doing so contacts the extension portion so as to release the engagement between the second engaging member and the second engaging portion. Likewise a claw-shaped transmitting element is pivotably fitted on an end portion of the cable-pulling lever and comes into an engagement with one of the transmitted portions of an restricting member, thereby to permit the manual forward force applied to the lever to be transmitted via the restricting member to the winding member. As soon as the rider releases the cable-pulling lever the transmitting element comes out of contact with the transmitted portions and would then allow the winding member to return to the previous position if it would not have been held by the first engaging member. Thus the first engaging member is the only movable positioning member that is capable of holding the wire take-up member in a predetermined shift position. All other movable positioning members, namely the transmitting element and the second engaging member are not capable of holding the wire take-up member in a predetermined shift position, because as soon as the rider releases the cable pulling lever or the release lever, the transmitting element or the second engaging member let got of the winding member and would let the winding member unwind, if it was not held by the one and only movable positioning member, namely the first engaging member that can actually hold the wire take-up member in a predetermined shift position.

In view of the above, it will be apparent to those skilled in the art from this disclosure that there exists a need for an improved bicycle shifting mechanism. This invention addresses this need in the art as well as other needs, which will become apparent to those skilled in the art from this disclosure.

### SUMMARY OF THE INVENTION

One object of the present invention is to provide a bicycle shifting mechanism for releasing a wire of a shift cable with the bicycle shifting mechanism being simple to operate such that a single gear shift or multiple gear shifts can be performed in a single gear shifting operation.

Another object of the present invention is to provide a bicycle control device for shifting a bicycle transmission that is relatively simple and inexpensive to manufacture and assemble.

The foregoing objects can basically be attained by providing a bicycle shifting mechanism that basically comprises a wire takeup member and a positioning mechanism. The wire takeup member is configured and arranged to rotate about a rotational axis. The positioning mechanism is configured and arranged to selectively maintain the wire takeup member in one of a plurality of predetermined shift positions. The positioning mechanism includes a first movable positioning member, a second movable positioning member separately movable relative to the first positioning member, a first toothed segment configured to move with the wire takeup member, a second toothed segment configured to move with the wire takeup member. The first and second movable positioning members are configured and arranged to alternately engage and disengage one of the first and second toothed segments, respectively, as the first and second movable positioning members are moved to perform a shifting operation between sequential shift positions of the predetermined shift positions. With this arrangement, a single gear shift or multiple gear shifts can be performed in a single gear shifting operation by the alternate movement of the first and second movable positioning members.

One of the basic principles that the invention is based on is the finding that advantages can be gained if more than one first toothed segment is provided, which is configured to move with the wire takeup member, and to combine this multiplication of toothed segments with separate, moveable positioning members, each being preferably only assigned to one of the toothed segments and being configured and arranged to either engage or disengage with this respective toothed segment. These positioning members can hold the wire takeup member in a predetermined shift position (if the respective movable positioning member engages with its respective toothed segment) or can allow the wire takeup member to move to a different predetermined shift position (if the respective movable positioning member is disengaged from its respective toothed segment).

The claimed mechanism allows for a respective positioning member to be un-involved (disengaged) when the wire takeup member is held in one of the predetermined shift positions. Where, for example, two movable positioning members are provided, the respective movable positioning member can be designed to be only involved in maintaining the wire takeup member in every other predetermined shift position, while the other movable positioning member is only involved in maintaining the wire takeup member in the remaining predetermined shift positions.

Freeing the movable positioning members from being involved in maintaining the wire takeup member in each predetermined shift position enables the design of a bicycle shift mechanism that can have further elements that already prepare the one disengaged movable positioning member for its next engagement with its respective toothed segment in order to maintain the next predetermined shift position, while the current predetermined shift position is being maintained through the engagement of another movable positioning member.

In a preferred embodiment, the interaction between a positioning member and its respective toothed segment is configured and arranged to form a ratchet arrangement there between. Ratchet arrangements allow for simple and reliable mechanisms that allow altering between engagement and disengagement of the positioning member with its respective toothed segment. Furthermore, a ratchet arrangement can allow for unidirectional relative movement between the positioning member and the respective toothed segment, which can be advantageous when changes between the predetermined shift positions are performed by the positioning mechanism only in one direction, while the change between predetermined shift positions of the wire takeup member in the opposite direction is achieved by a different mechanism. Especially, the first and second movable positioning member can include pivotally mounted positioning pawls that alternately engage and disengage one of the first and the second toothed segment, respectively, to form a ratchet arrangement there between. However, other designs for the interaction between a positioning member and its respective toothed segment are also feasible, like for example linearly displaced pins engaging depressions or teeth of a toothed wheel engaging the toothed segments.

In a preferred embodiment, the first toothed segment lies in a first plane and the second toothed segment lies in a second plane. In an especially preferred embodiment, the second plane is offset and parallel to the first plane. Arranging the toothed segments in different planes facilitates designing the shifting mechanism in such a way, that the engaging and the disengaging movement of the one positioning member takes place without disturbing the engaging and the disengaging movement of another positioning member. Arranging the planes offset and parallel to each other facilitates designing such a shifting mechanism even further.

In a preferred embodiment at least one of the movable positioning members is biased towards its engagement position for maintaining the wire takeup member in one of its plurality of predetermined shift positions. Biasing the positioning member towards the engagement position rather than not biasing it at all or biasing the positioning member towards the disengagement position (which all could also be considered) provides the additional safety, that an engagement between a positioning member and a toothed segment is ensured in any case.

In a preferred embodiment, a mechanism is configured and arranged to alternately move the first and second movable positioning member such that the first and the second movable positioning member alternately engaged and disengaged with one of the first and the second toothed segments, respectively. In an especially preferred embodiment, this mechanism is a releasing mechanism that provides for the wire takeup member to shift through the predetermined shift positions in a wire releasing direction. Such a mechanism ensures that the respective positioning member alters its position from engagement to disengagement and also coordinates the respective engaging or disengaging position between the positioning members. It can, for example, be designed to move one positioning member from a disengaging position into an engaging position and simultaneously move a further positioning member from an engaging into a disengaging position, but can - for example - also be designed to hold a positioning member in a disengaging or an engaging position while a further positioning member is moved from an engaging to an disengaging position or vice versa.

In a preferred embodiment, this mechanism, which for reasons of simplicity will be referred to as releasing mechanism (not limiting the mechanism to this function, however), includes at least one ratchet wheel operatively arranged to move one of the movable positioning member between an engagement position and a disengagement position. Especially preferred, a first ratchet wheel is operatively arranged to move a first positioning member between an engagement position and a disengagement position and a second ratchet wheel is operatively arranged to move a second movable positioning member between an engagement position and a disengagement position. While other means can be provided to move a positioning member between its engagement position and its disengagement position, like for example switches or linearly operating elements, providing ratchet wheels for moving the movable positioning member between its engagement position and disengagement position has proven to be an easily operated and (from a design prospective) small building mechanism.

In a preferred embodiment, the mechanism includes a lever (which will be referred to as releasing lever in the following without limiting the function of the lever to the releasing action, however) with a driving pawl that is configured and arranged to operate a ratchet wheel and can, in an especially preferred embodiment, alternately operate a first and a second ratchet wheels. It is possible, that separate elements are provided for operating the ratchet wheels. The driver's use of the shifting mechanism is however facilitated, if the number of elements to be operated for a shift is reduced, which is why it is preferred to have one single release lever that can operate the respective ratchet wheels.

In a preferred embodiment, the releasing mechanism includes a release lever that is configured and arranged to the pivot about a pivot axis that is offset from the rotational axis of the wire takeup member. Separating the pivot axis of the release lever from the rotational axis of the wire takeup member allows for a transmission ratio to be provided between the rotation of the release lever about its axis and the rotation of the wire takeup member about its rotational axis. This for example allows for a rotation of the release lever through a small rotational angle to be translated into a rotation of the wire takeup member through a larger rotational angle. Thus even if the rotational angle about the rotational axis between two sequential shift positions of the wire takeup member is large, the shifting mechanism can be designed in such a way, that a rotation of the release lever through a small rotational angle about its axis translates into the larger rotation of the wire takeup member, thus allowing the rotation of the releasing lever through a larger rotational angle to translate into a rotation of the wire takeup member through more than the rotational angle necessary to shift between two sequential shift positions. This is one of the ways the invention provides for allowing one single progress shifting operation of the release lever to provide a multiple gear shift.

In a preferred embodiment the release lever is configured and arranged to selectively release the wire takeup member to cause the wire takeup member to rotate one shift position of the predetermined shift positions when the release lever is moved from a rest position by a first predetermined amount and to cause the wire takeup member to rotate two consecutive shift positions of the predetermined shift positions when the release lever is moved from a rest position by a second predetermined amount in a single shift operation. This is one possibility of providing a shifting mechanism with a multiple gear shift that can be performed in a single gear shifting operation. The mechanism can be configured such as to cause the wire takeup member to rotate for more than two consecutive shift positions, for example by moving the release lever from a rest position by a further predetermined amount in a single shift operation. This can for example be achieved by providing more than two movable positioning members and more than two toothed segments or for the movement from the end of the second predetermined amount to the end of the third predetermined amount to have a consecutive engaging/disengaging effect on the first and second positioning member.

In a preferred embodiment, a biasing member is provided that is operatively coupled to the wire takeup member to apply an urging force on the wire takeup member in a first rotational direction. In a further preferred embodiment, a positioning member is configured and arranged to prevent the rotation of the wire takeup member in this first rotational direction against the urging force of the biasing member through its engagement with its respective toothed segment. Especially, the first and second movable positioning member selectively engage the first and second toothed segment to prevent rotation in the first rotational direction against the urging force of the biasing member.

In a preferred embodiment, a lever, especially preferred a release lever, is configured and arranged to pivot about a pivot axis that is offset from the rotational axis of the wire takeup member such that the release lever pivots form a rest position to operate at least one movable positioning member.

In a further embodiment a lever, especially preferred a winding lever, is provided that has a winding pawl that is configured and arranged to engage a further (referred to as third) toothed segment configured to move with the wire takeup member such that movement of the winding lever rotates the wire takeup member.

In a preferred embodiment, the winding pawl and the third toothed segment form a ratchet arrangement with the winding lever being biased to a rest position.

In a preferred embodiment, the winding lever is configured and arranged to pivot about the rotational axis of the wire takeup member such that the winding lever pivots from a rest position to engage the third toothed segment.

In a preferred embodiment, the winding lever is held out of engagement with its respective toothed segment in a rest position. This can be used to prevent it from interfereing with the rotation of the wire takeup member during a releasing operation. In an especially preferred embodiment, a mounting plate has a winding pawl holding projection or tab that holds the winding pawl out of engagement when the winding lever is in the rest position. The winding lever can be biased to its rest position by biasing means, like a spring.

In a preferred embodiment, a lever of the trigger action type is provided that are pushed for a shifting operation and automatically return to their normal rest position upon releasing the lever. In an especially preferred embodiment, the release lever and/or the winding lever are trigger action type levers.

In a preferred embodiment, the ratchet wheels are metal plate like members. In especially preferred embodiment, ratchet wheels that are designed to move in unison are coupled together. For example functionally alike toothed segments can be provided on separate ratchet wheels, with all the ratchet wheels that carry the respective toothed segments being coupled together. For example, bolts can be used to secure elements to another that are to turn in unison, for example to secure ratchet wheels carrying toothed segments onto the wire takeup member.

In a preferred embodiment, the teeth of a toothed segment are spaced apart along the peripheral edge of a ratchet wheel. Independent of the toothed segment being positioned on a ratchet wheel in a preferred embodiment, it is also preferred for the spacing between the teeth of a toothed segment to be spaced equally. The number of the teeth of a toothed segment can depend on the number of predetermined shift positions that the wire takeup member is to be maintained in. For example, were two toothed segment are provided with four teeth each, the wire takeup member can be maintained by the interaction of the respective positioning members with their respective toothed segments in eight predetermined shift positions. In order to increase or decrease the number of predetermined shift positions, the number of teeth in a toothed segment can be altered. Likewise the number of teeth in a toothed segment can be altered with the number of toothed segments being provided. Likewise the teeth of a toothed segment that is provided to cooperate with a separate lever, especially with a winding lever, can be adapted to the number or predetermined shift positions.

A toothed segment can be arranged on a ratchet wheel in such a manner, that it only takes up a part of the circumferential edge of the wheel. Toothed segments can however also be arranged to take up the complete circumferential edge of a ratchet wheel. In an especially preferred embodiment, the toothed segments being engaged by the positioning members and that are configured to move with the wire takeup member, for example through a ratchet wheel that is connected to the wire takeup member in a rotationally fixed manner, are designed to only take up a part of the circumferential edge of said ratchet wheels connected to the wire takeup member. In addition or as part of a different design toothed segments that are provided on ratchet wheels that are directly rotated by the rotation of a lever can be designed to be spaced around the complete circumferential edge of such a ratchet wheel.

### GENERAL INTERPRETATION OF TERMS

In understanding the scope of the present invention, the term "configured" as used herein to describe a component, section or part of a device includes hardware and/or software that is constructed and/or programmed to carry out the desired function. In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. As used herein to describe the present invention, the following directional terms "forward, rearward, above, downward, vertical, horizontal, below and transverse" as well as any other similar directional terms refer to those directions of a bicycle equipped with the present invention. Accordingly, these terms, as utilized to describe the present invention should be interpreted relative to a bicycle equipped with the present invention as used in the normal riding position. Finally, terms of degree such as "substantially", "about" and "approximately" as used herein mean a reasonable amount of deviation of the modified term such that the end result is not significantly changed. For example, these terms can be construed as including a deviation of at least ± 5% of the modified term if this deviation would not negate the meaning of the word it modifies.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims.

These and other objects, features, aspects and advantages of the present invention will become apparent to those skilled in the art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:

Figure 1 is a side elevational view of a bicycle equipped with a pair of control devices or shifters (only one shown) in accordance with one embodiment of the present invention;

Figure 2 is a top plan view of the right bicycle shifter illustrated in Figure 1, with the operating members (shift levers) in the rest position;

Figure 3 is an enlarged perspective view of selected internal parts of the bicycle shifting mechanism for the bicycle shifter illustrated in Figures 1 and 2 in accordance with the present invention;

Figure 4 is an exploded perspective view of selected internal parts of the bicycle shifting mechanism for the bicycle shifter illustrated in Figure 2 in accordance with the present invention;

Figure 5 is a simplified top plan view of selected internal parts of the bicycle shifting mechanism for the bicycle shifter illustrated in Figure 2, with operating members (shift levers) in their rest positions;

Figure 6 is a simplified top plan view of selected internal parts of the bicycle shifting mechanism for the bicycle shifter illustrated in Figure 2, with the winding lever in the rest position and the release lever in an intermediate actuating position to perform a single gear shifting operation;

Figure 7 is a simplified top plan view of selected internal parts of the bicycle shifting mechanism for the bicycle shifter illustrated in Figure 2, with the winding lever in the rest position and the release lever returned to the rest position;

Figure 8 is a simplified top plan view of selected internal parts of the bicycle shifting mechanism for the bicycle shifter illustrated in Figure 2, with the winding lever in the rest position and the release lever in an intermediate actuating position to perform a single gear shifting operation;

Figure 9 is a simplified top plan view of selected internal parts of the bicycle shifting mechanism for the bicycle shifter illustrated in Figure 2, with operating members (shift levers) in their rest positions;

Figure 10 is a simplified top plan view of selected internal parts of the bicycle shifting mechanism for the bicycle shifter illustrated in Figure 2, with the winding lever in an intermediate actuating position (prior to movement of the takeup member) and the release lever in the rest position;

Figure 11 is a simplified top plan view of selected internal parts of the bicycle shifting mechanism for the bicycle shifter illustrated in Figure 2, with the winding lever in a further actuating position to perform a single gear shifting operation and the release lever in the rest position; and

Figure 12 is a simplified bottom plan view of selected internal parts of the bicycle shifting mechanism for the bicycle shifter illustrated in Figure 2, with operating members (shift levers) in their rest positions.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

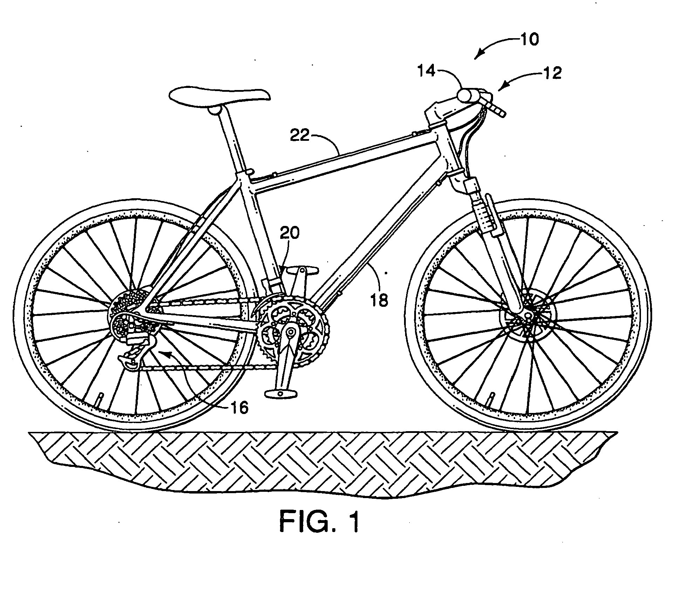

Referring initially to Figure 1, a bicycle 10 is illustrated with a bicycle control device or shifter 12 in accordance with one embodiment of the present invention. The bicycle shifter 12 is a right hand side control device that is mounted on a bicycle handlebar 14 so that it can be operated by the rider's right hand. The bicycle shifter 12 is preferably operatively coupled to a rear derailleur 16 via a shift control cable 18.

Preferably, the bicycle 10 includes a left hand side shifter (not shown) that is substantially identical to the bicycle shifter 12, except for the shifting mechanism has been modified to reduce the number of gears that can be shifted. Preferably, the left hand side shifter is operatively coupled to a front derailleur 20 via a shift control cable 22. Alternatively, the control devices can be switched so that the rider can operate the rear derailleur 16 and the front derailleur 20 with opposite hands. In any event, the left hand side shifter is essentially identical in construction and operation to the bicycle shifter 12, except that it is a mirror image of the bicycle shifter 12 and the number of shift positions for the left hand side shifter is different. Thus, only the bicycle shifter 12 will be discussed and illustrated herein. Preferably, the cables 18 and 22 are conventional bicycle cables that have an outer casing the covers an inner wire. For example, the shift control cable 18 has an inner wire 18a and an outer casing 18b.

Since most of the parts of the bicycle 10 are well known in the art, the parts of the bicycle 10 will not be discussed or illustrated in detail herein, except for the parts that relate to the present invention. In other words, only the parts related to the bicycle shifter 12 will be discussed and illustrated in detail herein. Moreover, various conventional bicycle parts such as brakes, additional sprockets, derailleurs, etc., which are not illustrated and/or discussed in detail herein, can be used in conjunction with the present invention.

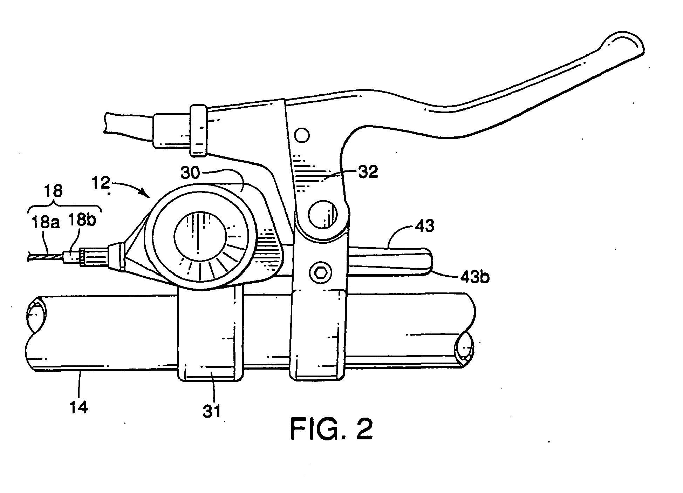

Referring now to Figure 2, the bicycle shifter 12 is illustrated in the rest position and attached to the right hand side of the bicycle handlebar 14. The bicycle shifter 12 has a housing 30 with a bicycle handlebar mounting portion 31 for mounting the bicycle shifter 12 to the bicycle handlebar 14 in a conventional manner adjacent to a brake lever 32. Alternatively, the bicycle shifter 12 can be integrated with the brake lever 32 as needed and/or desired.

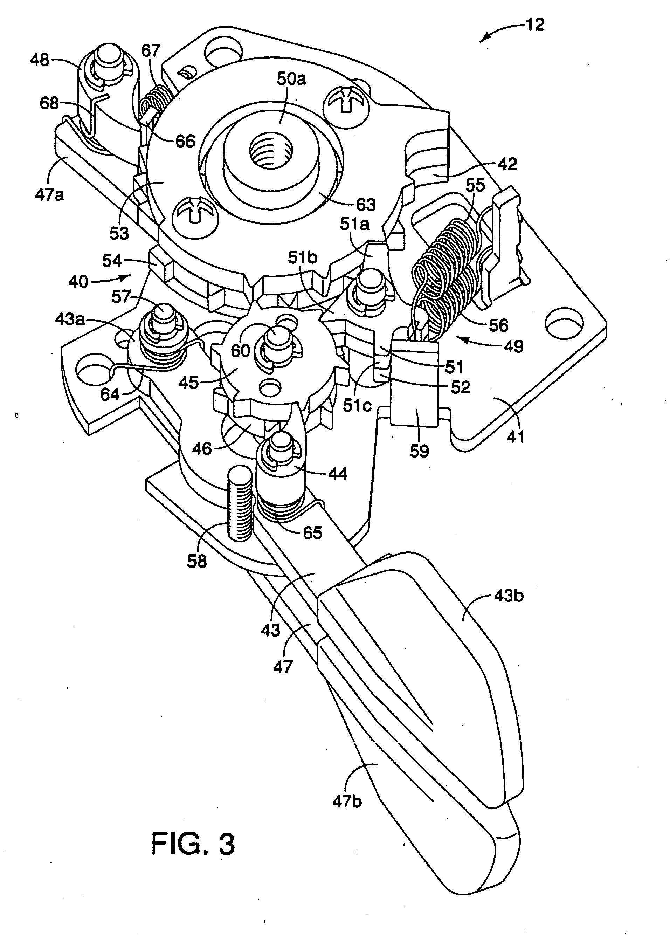

Referring now to Figure 3, inside the housing 30, the bicycle shifter 12 has a bicycle shifting mechanism 40 for pulling and releasing the inner wire 18a of the shift cable 18. The bicycle shifting mechanism 40 is configured and arranged to perform either a single gear shift or multiple gear shifts in a single gear shifting (winding or releasing) operation. In other words, the bicycle shifting mechanism 40 is configured and arranged such that the inner wire 18a of the shift control cable 18 can be pulled and released to selectively effect either a single-stage gear shift operation or a multiple-stage gear shift operation in a single progress shifting operation as explained below.

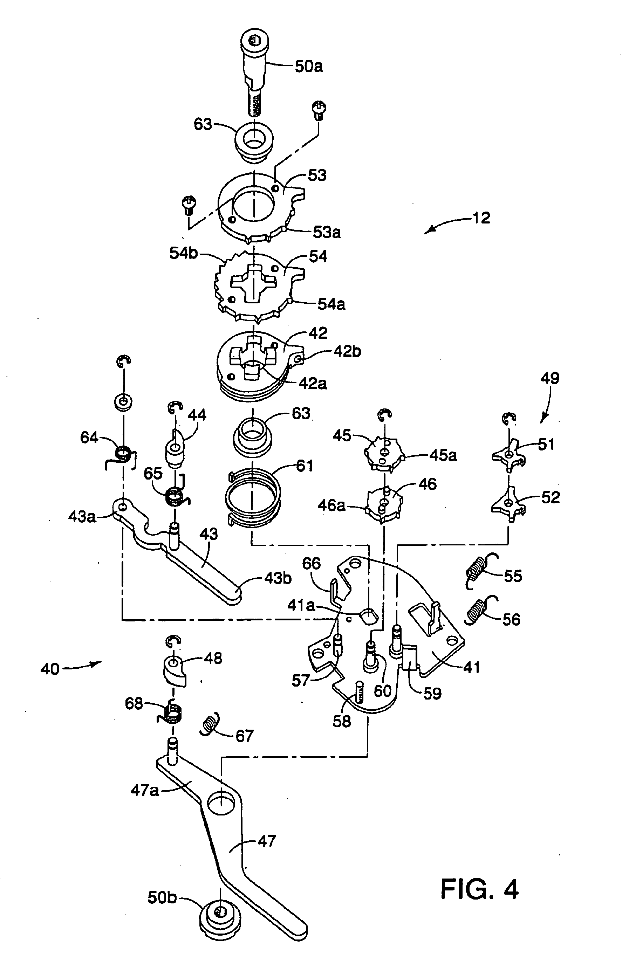

As best seen in Figures 3 and 4, the bicycle shifting mechanism 40 basically includes a mounting plate 41, a wire takeup member 42, a release lever 43 with a driving or release pawl 44, a first release ratchet member or wheel 45, a second release ratchet member or wheel 46, a winding lever 47 with a driving or winding pawl 48 and a positioning mechanism 49. The wire takeup member 42 and the winding lever 47 are movably mounted to the mounting plate 41 by a main pivot shaft formed by a mounting bolt 50a and a mounting nut 50b, while the release lever 43 is pivotally mounted to the mounting plate 41 about an axis that is offset from a rotational axis A defined by the main pivot shaft (i.e., the mounting bolt 50a and the mounting nut 50b).

Basically, the release lever 43 and the winding lever 47 are selectively operated (pushed) by the rider to either release or wind the wire takeup member 42 via the positioning mechanism 49 as discussed below. The release lever 43, the driving or release pawl 44 and the first and second release ratchet wheels 45 and 46 basically form a wire releasing mechanism. Preferably, the release lever 43 and the winding lever 47 are trigger action type levers that are pushed to perform a shifting operation and that automatically returns to their normal rest position upon releasing the levers 43 and 47.

Still referring to Figures 3 and 4, the positioning mechanism 49 basically includes a first movable positioning member or pawl 51, a second movable positioning member or pawl 52, a first positioning ratchet wheel 53, a second positioning ratchet wheel 54, a first pawl biasing member 55 and a second pawl biasing member 56. The first and second positioning ratchet wheels 53 and 54 are preferably metal plate like members that are fixedly coupled together and to the wire takeup member 42 so that they all rotate together. Generally speaking, the positioning mechanism 49 is configured and arranged to selectively maintain the wire takeup member 42 in one of a plurality of predetermined shift positions in response to movement of the release lever 43 from the rest position to an actuating position. Depending on the amount of movement of the release lever 43, the positioning mechanism 49 will cause the wire takeup member 42 to move one or more gear shift positions in a single progressive movement of the release lever 43 from the rest position to one of the actuating positions.

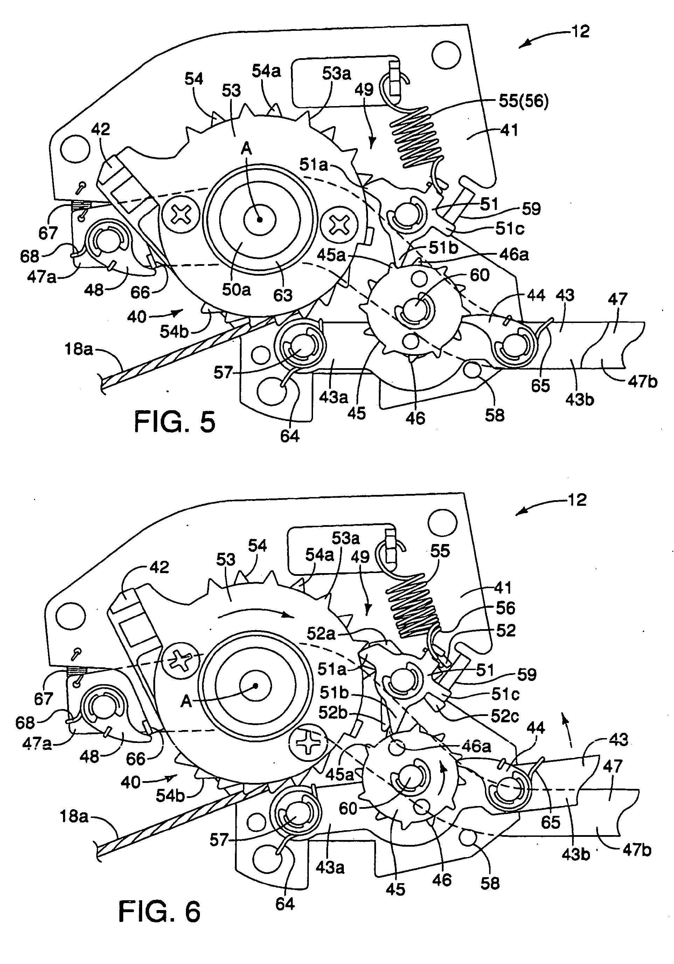

As best seen in Figures 5 to 8, the first and second movable positioning pawls 51 and 52 are preferably metal plate like members that are pivotally mounted to the mounting plate 41 to selectively release the first and second positioning ratchet wheels 53 and 54, respectively, in response to movement of the release lever 43 from the rest position to an actuating position. Of course, this releasing operation also releases the wire takeup member 42 so that the inner wire 18a is unwound from the wire takeup member 42. The first and second movable positioning pawls 51 and 52 are normally maintained in contact with the first and second positioning ratchet wheels 53 and 54, respectively, by the first and second pawl biasing members 55 and 56. In other words, the first and second movable positioning pawls 51 and 52 are biased by the first and second pawl biasing members 55 and 56, respectively, toward engagement positions for maintaining the wire takeup member 42 in one of a plurality of predetermined shift positions. Thus, the first and second movable positioning pawls 51 and 52 are separately movable relative to each other to alternately retain and release the wire takeup member 42 via engagement with the first and second positioning ratchet wheels 53 and 54 as explained below.

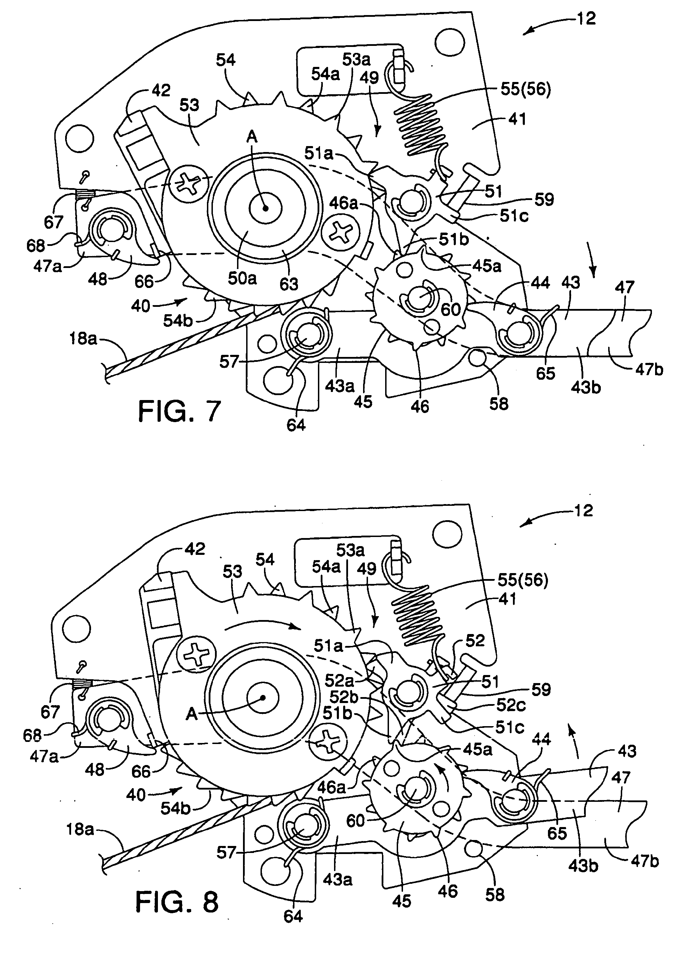

In particular, as best seen in Figures 6 and 8, the first movable positioning pawl 51 has a position maintaining tooth 51 a, a position release tooth 51 b and a stop tooth 51c. Similarly, the second movable positioning pawl 52 has a position maintaining tooth 52a, a position release tooth 52b and a stop tooth 52c. The first position maintaining tooth 51 a is configured and arranged to engage the first positioning ratchet wheel 53 to selectively retain the wire takeup member 42 in one of a plurality of first predetermined shift positions as seen in Figures 6 and 7. The second position maintaining tooth 52a is configured and arranged to engage the second positioning ratchet wheel 54 to selectively retain the wire takeup member 42 in one of a plurality of second predetermined shift positions as seen in Figure 8. The first predetermined shift positions of the wire takeup member 42 alternate with respect to the second predetermined shift positions of the wire takeup member 42. In response to movement of the release lever 43 from the rest position to an actuating position, the first and second position release teeth 51 b and 52b are alternately engaged by the first and second release ratchet wheels 45 and 46, respectively, such that the first and second movable positioning pawls 51 and 52 are alternately pivoted to alternately release and retain the first and second positioning ratchet wheels 53 and 54, respectively, as best seen in Figures 5 to 8.

As mentioned above, the first and second positioning ratchet wheels 53 and 54 are fixedly coupled together and to the wire takeup member 42 so that they all rotate together. In the illustrated embodiment, two screws are used to secure the first and second positioning ratchet wheels 53 and 54 onto the wire takeup member 42. Of course, other securing arrangements can be used as needed and/or desired.

The first positioning ratchet wheel 53 is provided with a plurality of first teeth that form a first toothed segment 53a. The first teeth of the first toothed segment 53a are configured and arranged to be selectively engaged by the first position maintaining tooth 51 a of the first movable positioning pawl 51 to selectively retain the wire takeup member 42 in one of the first predetermined shift positions. Preferably, the first teeth of the first toothed segment 53a are spaced apart along the peripheral edge of the first positioning ratchet wheel 53 with the spacing between adjacent ones of the first teeth of the first toothed segment 53a being equal. While the first toothed segment 53a of the first positioning ratchet wheel 53 is provided with four teeth, it will be apparent to those skilled in the art from this disclosure that fewer or more teeth can be used as needed and/or desired.

The second positioning ratchet wheel 54 is provided with a plurality of second teeth that form a second toothed segment 54a, and a plurality of third teeth that form a third toothed segment 54b. The second teeth of the second toothed segment 54a are configured and arranged to be selectively engaged by the second position maintaining tooth 52a of the second movable positioning pawl 52 to selectively,retain the wire takeup member 42 in one of the second predetermined shift positions. The third teeth of the third toothed segment 54b are configured and arranged to be selectively engaged by the winding pawl 48 to rotate the wire takeup member 42 in response to movement of the winding lever 47 from the rest position to an actuating position.

Preferably, the second teeth of the second toothed segment 54a are spaced apart along the peripheral edge of the second positioning ratchet wheel 54 with the spacing between adjacent ones of the second teeth of the first toothed segment 54a being equal. While the second toothed segment 54a of the second positioning ratchet wheel 54 is provided with four teeth, it will be apparent to those skilled in the art from this disclosure that fewer or more teeth can be used as needed and/or desired. The third teeth of the third toothed segment 54b are winding teeth that are spaced apart along the peripheral edge of the second positioning ratchet wheel 54. While the third teeth of the third toothed segment 54b of the second positioning ratchet wheel 54 is provided with seven teeth, it will be apparent to those skilled in the art from this disclosure that fewer or more teeth can be used as needed and/or desired.

When the first and second positioning ratchet wheels 53 and 54 are secured together on the wire takeup member 42, the first toothed segment 53a lies in a first plane and the second toothed segment 54a lies in a second plane that is offset and parallel to the first plane. Furthermore, when the first and second positioning ratchet wheels 53 and 54 are secured together on the wire takeup member 42, the relative rotational orientations of the first and second positioning ratchet wheels 53 and 54 are such that the first teeth of the first toothed segment 53a are arranged to alternate with respect to the second teeth of the second toothed segment 54a. In other words, the first and second movable positioning pawls 51 and 52 are configured and arranged to alternately engage and disengage one of the first and second toothed segments 53a and 54a, respectively, as the first and second movable positioning pawls 51 and 52 are moved to perform a shifting operation between sequential shift positions of the predetermined shift positions. Accordingly, the first and second movable positioning pawls 51 and 52 alternately engage and disengage one of the first and second toothed segments 53a and 54a, respectively, to form a ratchet arrangement therebetween.

The mounting plate 41 is fixedly mounted to the housing 30 via fasteners or screws (not shown). The mounting plate 41 rotatably supports the wire takeup member 42 about a rotational axis A. In particular, the mounting plate 41 has a mounting hole 41 a that receives the mounting bolt 50a for securing the wire takeup member 42 to the mounting plate 41 in a rotatable manner. The release lever 43 is pivotally mounted to the mounting plate 41 for pivotal movement between a rest position and a fully actuating position in which multiple gear shifts normally occur. In particular, the mounting plate 41 has a pivot pin 57 for pivotally supporting the release lever 43 on the mounting plate 41. Movement of the release lever 43 to the rest position is limited by a stop or abutment 58 that is formed on the mounting plate 41. In the illustrated embodiment, the abutment 58 is formed by a screw that is threaded into a hole in the mounting plate 41. The mounting plate 41 also has a stop or abutment 59 that limits the pivotally movements of the first and second movable positioning pawls 51 and 52 as explained below.

The first and second release ratchet wheels 45 and 46 are preferably metal plate like members that are rotatably mounted to the mounting plate 41 by a pivot pin 60. As explained below, the first and second release ratchet wheels 45 and 46 are fixed together and are rotated in response to movement of the release lever 43 from the rest position to an actuating position. In particular, movement of the release lever 43 cause the release pawl 44 to rotate the first and second release ratchet wheels 45 and 46 in a counterclockwise direction as viewed from a top plan view. When the release lever 43 returns to the rest position from an actuating position, the first and second release ratchet wheels 45 and 46 remain stationary.

Generally speaking, the first release ratchet wheel 45 is operatively arranged to move the first movable positioning pawl 51 between an engagement position and a disengagement position as seen in Figure 8. Similarly, the second release ratchet wheel 46 is operatively arranged to move the second movable positioning pawl 52 between an engagement position and a disengagement position as seen in Figure 6. Thus, this rotation of the first and second release ratchet wheels 45 and 46 causes the first and second movable positioning pawls 51 and 52 to be alternately pivoted against the biasing forces of the first and second pawl biasing members 55 and 56, respectively. This alternating pivoting of the first and second movable positioning pawls 51 and 52 causes the first and second positioning ratchet wheels 53 and 54 to be alternately released such that the wire takeup member 42 can rotate in the release (clockwise) direction under the urging force of the wire takeup spring 61 as seen in Figures 6 and 8. In particular, when the first movable positioning pawl 51 disengages from the first positioning ratchet wheel 53, the wire takeup member 42 together with both of the first and second positioning ratchet wheels 53 and 54 rotate in the release (clockwise) direction under the urging force of the wire takeup spring 61, until the second movable positioning pawl 52 catches the second positioning ratchet wheel 54 to perform a single gear shifting operation. Similarly, when second movable positioning pawl 52 disengages from the second positioning ratchet wheel 54, the wire takeup member 42 together with both of the first and second positioning ratchet wheels 53 and 54 rotate in the release (clockwise) direction under the urging force of the wire takeup spring 61, until the first movable positioning pawl 51 catches the first positioning ratchet wheel 53 to perform a single gear shifting operation. Thus, the release lever 43, the driving or release pawl 44 and the first and second release ratchet wheels 45 and 46 basically form a wire releasing mechanism that is configured and arranged to alternately move the first and second movable positioning pawls 51 and 52 such that the first and second movable positioning wheels 53 and 54 are alternately engaged and disengaged from the first and second movable positioning pawls 51 and 52, respectively, in response to the rotation of the first and second release ratchet wheels 45 and 46. In this manner, the release lever 43 is configured and arranged to selectively release the wire takeup member 42 to cause the wire takeup member 42 to rotate one shift position of the predetermined shift positions when the release lever 43 is moved from a rest position by a first predetermined amount and to cause the wire takeup member 42 to rotate two consecutive shift positions of the predetermined shift positions when the release lever is moved from a rest position by a second predetermined amount in a single shift operation.

More specifically, the first release ratchet wheel 45 is provided with a plurality of first teeth that form a first toothed segment 45a. Preferably, the first teeth of the first toothed segment 45a are spaced apart around the circumferential edge of the first release ratchet wheel 45 with the spacing between adjacent ones of the first teeth of the first toothed segment 45a being equal. The second release ratchet wheel 46 is provided with a plurality of second teeth that form a second toothed segment 46a. Preferably, the second teeth of the second toothed segment 46a are spaced apart around the circumferential edge of the second release ratchet wheel 46 with the spacing between adjacent ones of the second teeth of the second toothed segment 46a being equal.

The first and second teeth of the first toothed segments 45a and 46a are configured and arranged to be selectively engaged by the release pawl 44 to rotate the first and second release ratchet wheels 45 and 46 in a counterclockwise direction as seen in the Figures. Rotation of the first and second release ratchet wheels 45 and 46 causes the first teeth of the first toothed segment 45a to selectively engage, one at a time, the position release tooth 51b of the first movable positioning pawl 51, and causes the second teeth of the second toothed segment 46a to selectively engage, one at a time, the position release tooth 52b of the second movable positioning pawl 52. Thus, the engagement of one of the first teeth of the first toothed segment 45a with the position release tooth 51 b of the first movable positioning pawl 51 causes the first movable positioning pawl 51 to pivot. This pivotal movement of the first movable positioning pawl 51 results in the first position maintaining tooth 51 a of the first movable positioning pawl 51 being moved out of engagement with one of the first teeth of the first toothed segment 53a of the first positioning ratchet wheel 53. Once the first position maintaining tooth 51 a of the first movable positioning pawl 51 releases one of the first teeth of the first toothed segment 53a of the first positioning ratchet wheel 53, then the first and second positioning ratchet wheels 53 and 54 can rotate together with the wire takeup member 42 by one gear shift position. In particular, when the first movable positioning pawl 51 releases the first positioning ratchet wheel 53, the first and second positioning ratchet wheels 53 and 54 can freely rotate together with the wire takeup member 42 under an urging force applied to the wire takeup member 42 by the wire takeup biasing member or spring 61. Rotation of the wire takeup member 42 is stopped by the second position maintaining tooth 52a of the second movable positioning pawl 52 engaging one of the second teeth of the second toothed segment 54a of the second positioning ratchet wheel 54.

Similarly, the engagement of one of the second teeth of the second toothed segment 46a with the position release tooth 52b of the second movable positioning pawl 52 causes the second movable positioning pawl 52 to pivot. This pivotal movement of the second movable positioning pawl 52 results in the second position maintaining tooth 52a of the second movable positioning pawl 52 being moved out of engagement with one of the second teeth of the second toothed segment 54a of the second positioning ratchet wheel 54. Once the second position maintaining tooth 52a of the second movable positioning pawl 52 releases one of the second teeth of the second toothed segment 54a of the second positioning ratchet wheel 54, then the first and second positioning ratchet wheels 53 and 54 can rotate together with the wire takeup member 42 by one gear shift position. In particular, when the second movable positioning pawl 52 releases the second positioning ratchet wheel 54, the first and second positioning ratchet wheels 53 and 54 can freely rotate together with the wire takeup member 42 under an urging force applied to the wire takeup member 42 by the wire takeup biasing member or spring 61. Rotation of the wire takeup member 42 is stopped by the first position maintaining tooth 51 a of the first movable positioning pawl 51 engaging one of the first teeth of the first toothed segment 53a of the first positioning ratchet wheel 53.

As best seen in Figure 4, the wire takeup member 42 is a conventional type wire takeup spool in which the inner wire 18a is round along the peripheral edge surface of the wire takeup member 42 as the wire takeup member 42 is rotated in a counterclockwise direction. Thus, the wire takeup member 42 is configured and arranged to rotate about the rotational axis A in a clockwise direction during a wire releasing operation and a counterclockwise direction during a wire winding operation as seen in Figures 5 to 11. The wire takeup biasing member or spring 61 is operatively coupled to the wire takeup member 42 to apply an urging force on the wire takeup member 42 in a first (clockwise) rotational direction. The wire takeup spring 61 is preferably a torsion spring having a first end attached to the wire takeup member 42 and a second end coupled to the mounting plate 41. The wire takeup spring 61 applies a biasing force to urge the wire takeup member 42 in the clockwise direction as seen in Figures 5-11.

Thus, the wire takeup member 42 has a center opening 42a that is rotatably mounted on the mounting bolt 50a. Preferably, the center opening 42a has a pair of step shaped washers 63 provided therein to form a smooth cylindrical metal insert between the wire takeup member 42 and the mounting bolt 50a. The peripheral edge of the wire takeup member 42 has a wire attachment opening 42b for attaching the inner wire 18a of the shift cable 18 thereto. Also, the bottom of the wire takeup member 42 has a hole for attaching the wire takeup spring 61 thereto. Thus, the wire takeup spring 61 biases the wire takeup member 42 in a clockwise direction, i.e., the shift releasing direction. When the step shaped washers 63 are inserted into the center opening 42a of the wire takeup member 42, the bottom one of the step shaped washers 63 together with an annular ring formed on the bottom surface of the wire takeup member 42 form a shape between the mounting plate 41 and the wire takeup member 42 so that the wire takeup spring 61 is not compressed in the axial direction when the mounting bolt 50a and the mounting nut 50b are tightened together.

The release lever 43 has a first (inner) end 43a pivotally supported on the mounting plate 41 by the pivot pin 57 for pivotally movement, and a second (outer) end 43b that projects out of the housing 30 for the rider to operate. Thus, the release lever 43 is configured and arranged to pivot about a pivot axis that is offset from the rotational axis A of the wire takeup member 42 such that the release lever 43 pivots from the rest position to alternately operate the first and second movable positioning pawls 51 and 52 as explained below.

As mention above, preferably, the release lever 43 is a trigger action type lever that is pushed to perform a shifting operation and that automatically returns to its normal rest position upon releasing the release lever 43. Thus, the release lever 43 is biased to a rest position (i.e., against the abutment 58) by a biasing member or spring 64. The release pawl 44 on the release lever 43 is configured and arranged to alternately operate the first and second release ratchet wheels 45 and 46 in response to the pivotal movement of the release lever 43. In particular, movement of the release lever 43 from the rest position causes the release pawl 44 to rotate the first and second release ratchet wheels 45 and 46 together in a counterclockwise direction as seen from a top plan view. The release pawl 44 is urged into engagement with the first and second release ratchet wheels 45 and 46 by a biasing member or spring 65 so that the release pawl 44 remains in contact with the first and second release ratchet wheels 45 and 46.

Now the winding lever 47 will be explained in greater detail with reference to Figures 4 and 9 to 12. Basically, the winding lever 47 is pivotally mounted to the mounting plate 41 on the mounting nut 50b for pivotal movement from its rest position to a single gear shift actuating position or one of several multiple gear shift actuating positions in which multiple gear shifts occur. Normally, as seen in Figures 5 to 9, the winding pawl 48 of the winding lever 47 is held out of engagement from the positioning mechanism 49 so that it does not interfere with the rotation of the wire takeup member 42 during a releasing operation. Specifically, the mounting plate 41 has a winding pawl holding projection or tab 66 that holds the winding pawl 48 out of engagement from the positioning mechanism 49 when the winding lever 47 is in the rest position.

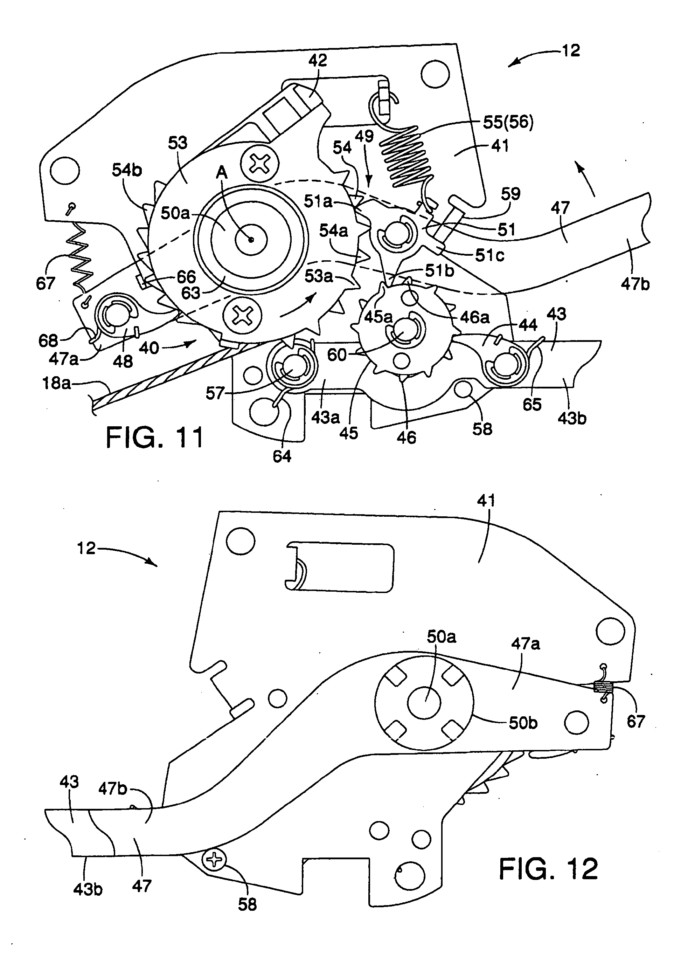

As seen in Figure 12, the winding lever 47 has a first or inner end 47a with the winding pawl pivotally mounted thereon, and a second or outer end 47b that projects out of the housing 30 for the rider to operate. As mention above, preferably, the winding lever 47 is a trigger action type lever that is pushed to perform a shifting operation and that automatically returns to its normal rest position upon releasing the winding lever 47. Thus, the winding lever 47 is biased to a rest position (i.e., against the abutment 58) by a biasing member or spring 67.

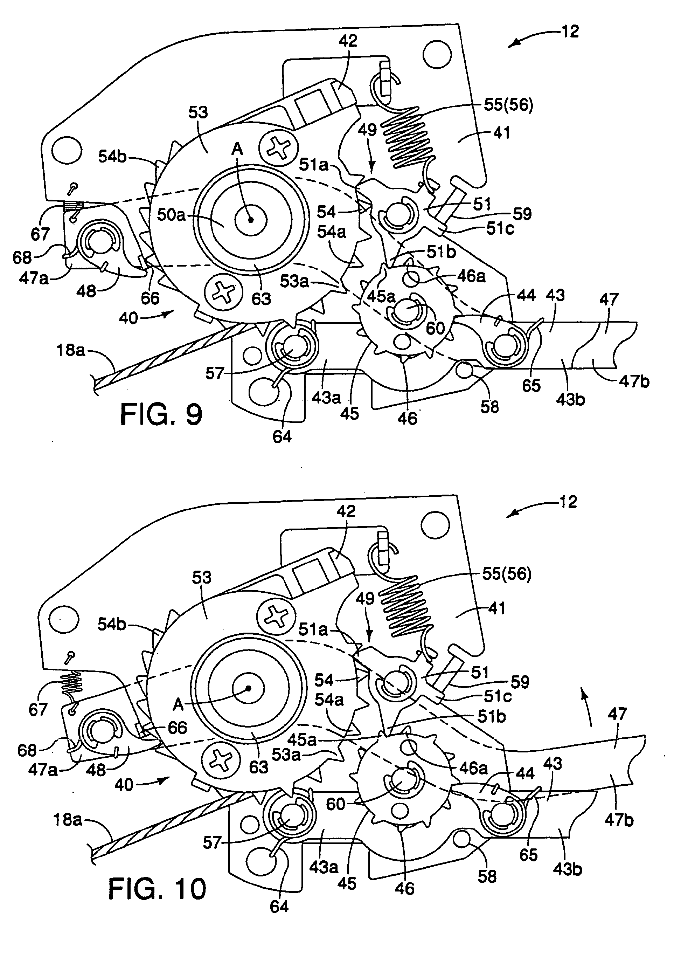

As seen in Figures 10 and 11, the winding pawl 48 on the winding lever 47 is configured and arranged to selectively engage the third teeth of the third toothed segment 54b of the second positioning ratchet wheel 54 in response to the pivotal movement of the winding lever 47. As mentioned above, normally, the winding pawl 48 of the winding lever 47 rests on the winding pawl holding projection or tab 66 so that the winding pawl 48 is held out of engagement from the third teeth of the third toothed segment 54b of the second positioning ratchet wheel 54. In this way, the winding pawl 48 does not interfere with the rotation of the wire takeup member 42 during a releasing operation. During a winding operation, movement of the winding lever 47 from the rest position causes the winding pawl 48 to move off the winding pawl holding tab 66 due to the urging force of the torsion spring 68 and engage one of the third teeth of the third toothed segment 54b of the second positioning ratchet wheel 54 as seen in Figure 10. Further movement of the winding lever 47 causes the wire takeup member 42 to rotate as the winding pawl 48 rotates the second positioning ratchet wheel 54 in a counterclockwise direction as seen in Figure 11. Once the winding lever 47 is released, the spring 67 urges the winding lever 47 back to its rest position. Thus, the winding pawl 48 ratchets over the third teeth of the third toothed segment 54b of the second positioning ratchet wheel 54 and rests on the winding pawl holding projection or tab 66.

## Claims

1. A bicycle shifting mechanism comprising:
- a wire takeup member (42) configured and arranged to rotate about a rotational axis; and
- a positioning mechanism (49) configured and arranged to selectively maintain the wire takeup member (42) in one of a plurality of predetermined shift positions,
- the positioning mechanism (49) including a first movable positioning member (51), a second movable positioning member (52) separately movable relative to the first positioning member (51), whereby the first movable positioning member (51) can hold the wire takeup member (42) in a predetermined shift position,
- first toothed segment (53a) configured to move with the wire takeup member (42), and a second toothed segment (54a) configured to move with the wire takeup member (42),
- the first and second movable positioning members (51, 52) being configured and arranged to alternately engage and disengage one of the first and second toothed segments (53a; 54a), respectively, as the first and second movable positioning members (51, 52) are moved to perform a shifting operation between sequential shift positions of the predetermined shift positions, **characterised in that** the second movable positioning member (52) can hold the wire take up member (42) in a predetermined shift position.

2. The bicycle shifting mechanism according to claim 1, **wherein**
the first and second movable positioning members (51, 52) include pivotally mounted positioning pawls that alternately engage and disengage one of the first and second toothed segments (53a, 54a), respectively, to form a ratchet arrangement therebetween.

3. The bicycle shifting mechanism according to claim 1 or 2, **wherein**
the first toothed segment (53a) lies in a first plane and the second toothed segment (54a) lies in a second plane that is offset and parallel to the first plane.

4. The bicycle shifting mechanism according to any one of claims 1 to 3, **wherein**
the first and second movable positioning members (51, 52) are biased toward engagement positions for maintaining the wire takeup member (42) in one of a plurality of predetermined shift positions.

5. The bicycle shifting mechanism according to any one of claims 1 to 4, further comprising
a releasing mechanism configured and arranged to alternately move the first and second movable positioning members (51. 52) such that the first and second movable positioning members (51, 52) are alternately engaged and disengaged with one of the first and second toothed segments (53a, 54a), respectively.

6. The bicycle shifting mechanism according to claim 5, **wherein**
the releasing mechanism includes a first ratchet wheel (45) operatively arranged to move the first movable positioning member (51) between an engagement position and a disengagement position, and a second ratchet wheel (46) operatively arranged to move the second movable positioning member (52) between an engagement position and a disengagement position.

7. The bicycle shifting mechanism according to claim 6, **wherein**
the releasing mechanism includes a release lever (43) with a driving pawl (48) that is configured and arranged to alternately operate the first and second ratchet wheels (45, 46).

8. The bicycle shifting mechanism according to claim 6 or 7, **wherein**
the releasing mechanism includes a release lever (43) that is configured and arranged to pivot about a pivot axis that is offset from the rotational axis of the wire takeup member (42).

9. The bicycle shifting mechanism according to claim 7 or 8, **wherein**
the release lever (43) is configured and arranged to selectively release the wire takeup member (42) to cause the wire takeup member (42) to rotate one shift position of the predetermined shift positions when the release lever (43) is moved from a rest position by a first predetermined amount and to cause the wire takeup member (42) to rotate two consecutive shift positions of the predetermined shift positions when the release lever (43) is moved from a rest position by a second predetermined amount in a single shift operation.

10. The bicycle shifting mechanism according to any one of claims 1 to 9, further comprising
a biasing member (61) operatively coupled to the wire takeup member (42) to apply an urging force on the wire takeup member (42) in a first rotational direction with the first and second movable positioning members (51, 52) selectively engaging the first and second toothed segments (53a, 54a) to prevent rotation in the first rotational direction against the urging force of the biasing member (61).

11. The bicycle shifting mechanism according to any one of claims 1 to 10, further comprising
a release lever (43) configured and arranged to pivot about a pivot axis that is offset from the rotational axis of the wire takeup member (42) such that the release lever (43) pivots from a rest position to operate the first and second movable positioning members (51, 52).

12. The bicycle shifting mechanism according to any one of claims 1 to 11, further comprising
a winding lever (47) with a winding pawl (48) that is configured and arranged to engage a third toothed segment (54b) configured to move with the wire takeup member (42) such that movement of the winding lever (47) rotates the wire takeup member (42).

13. The bicycle shifting mechanism according to claim 12, **wherein**
the winding pawl (47) and the third toothed segment (54b) form a ratchet arrangement with the winding lever (47) being biased to a rest position.

14. The bicycle shifting mechanism according to claim 12 or 13, **wherein**
the winding lever (47) is configured and arranged to pivot about the rotational axis of the wire takeup member (42) such that the winding lever (47) pivots from a rest position to engage the third toothed segment (54b).

15. A bicycle control device for shifting a bicycle transmission comprising a bicycle shifting mechanism according to any one of claims 1 to 14.

## Patentansprüche

1. Fahrrad-Schaltmechanismus, umfassend:
- ein Seilanzugselement (42), das zum Drehen um eine Drehachse konfiguriert und angeordnet ist, und
- einen Positioniermechanismus (49), der zum selektiven Halten des Seilanzugselements (42) in einer von einer Vielzahl vorbestimmter Schaltpositionen konfiguriert und angeordnet ist,
- wobei der Positioniermechanismus (49) ein erstes bewegliches Positionierelement (51), ein zweites bewegliches Positionierelement (52), das relativ zum ersten Positionierelement (51) separat beweglich ist, beinhaltet, wodurch das erste bewegliche Positionierelement (51) das Seilanzugselement (42) in einer vorbestimmten Schaltposition festhalten kann,
- ein erstes verzahntes Segment (53a), das zum Bewegen mit dem Seilanzugselement (42) konfiguriert ist, und ein zweites verzahntes Segment (54a), das zum Bewegen mit dem Seilanzugselement (42) konfiguriert ist,
- wobei das erste und das zweite bewegliche Positionierelement (51, 52) konfiguriert und angeordnet sind, um abwechselnd mit dem ersten bzw. dem zweiten verzahnten Segment (53a, 54a) in Eingriff bzw. außer Eingriff zu kommen, während das erste und das zweite bewegliche Positionierelement (51, 52) bewegt werden, um einen Schaltvorgang zwischen sequentiellen Schaltpositionen der vorbestimmten Schaltpositionen durchzuführen, **dadurch gekennzeichnet, dass** das zweite bewegliche Positionierelement (52) das Seilanzugselement (42) in einer vorbestimmten Schaltposition festhalten kann.

2. Fahrrad-Schaltmechanismus nach Anspruch 1, wobei das erste und das zweite bewegliche Positionierelement (51, 52) schwenkbar gelagerte Positionierklinken aufweisen, die abwechselnd mit dem ersten bzw. dem zweiten verzahnten Segment (53a, 54a) in Eingriff bzw. außer Eingriff kommen, um zwischen ihnen eine Gesperreanordnung zu bilden.

3. Fahrrad-Schaltmechanismus nach Anspruch 1 oder 2, wobei das erste verzahnte Segment (53a) in einer ersten Ebene liegt und das zweite verzahnte Element (54a) in einer zweiten Ebene liegt, die von der ersten Ebene versetzt und parallel zu ihr ist.

4. Fahrrad-Schaltmechanismus nach einem der Ansprüche 1 bis 3, wobei das erste und das zweite bewegliche Positionierelement (51, 52) in Richtung auf Eingriffspositionen zum Halten des Seilanzugselements (42) in einer von einer Vielzahl von vorbestimmten Schaltpositionen vorgespannt sind.

5. Fahrrad-Schaltmechanismus nach einem der Ansprüche 1 bis 4, ferner umfassend einen Lösemechanismus, der konfiguriert und angeordnet ist, um das erste und das zweite bewegliche Positionierelement (51, 52) abwechselnd zu bewegen, so dass das erste und das zweite bewegliche Positionierelement (51, 52) abwechselnd mit dem ersten bzw. dem zweiten verzahnten Segment (53a, 54a) in Eingriff bzw. außer Eingriff kommen.

6. Fahrrad-Schallmechanismus nach Anspruch 5, wobei der Lösemechanismus ein erstes Sperrrad (45), das funktionell angeordnet ist, um das erste bewegliche Positionierelement (51) zwischen einer Eingriffsposition und einer Position außer Eingriff zu bewegen, und ein zweites Sperrrad (46), das funktionell angeordnet ist, um das zweite bewegliche Positionierelement (52) zwischen einer Eingriffsposition und einer Position außer Eingriff zu bewegen, beinhaltet.

7. Fahrrad-Schaltmechanismus nach Anspruch 6, wobei der Lösemechanismus einen Lösehebel (43) mit einer Antriebsklinke (48) beinhaltet, die konfiguriert und angeordnet ist, um das erste und das zweite Sperrrad (45, 46) abwechselnd zu betätigen.

8. Fahrrad-Schaltmechanismus nach Anspruch 6 oder 7, wobei der Lösemechanismus einen Lösehebel (43) beinhaltet, der zum Schwenken um eine Schwenkachse, die von der Drehachse des Seilanzugselements (42) versetzt ist, konfiguriert und angeordnet ist.

9. Fahrrad-Schaltmechanismus nach Anspruch 7 oder Anspruch 8, wobei der Lösehebel (43) konfiguriert und angeordnet ist, um das Seilanzugselement (42) selektiv zu lösen, um zu verursachen, dass sich das Seilanzugselement (42) um eine Schaltposition der vorbestimmten Schaltpositionen dreht, wenn der Lösehebel (43) um einen ersten vorbestimmten Grad aus einer Ruheposition bewegt wird, und um zu verursachen, dass sich das Seilanzugselement (42) um zwei aufeinanderfolgende Schaltpositionen der vorbestimmten Schaltpositionen dreht, wenn der Lösehebel (43) in einem einzelnen Schaltvorgang um einen zweiten vorbestimmten Grad aus einer Ruheposition bewegt wird.

10. Fahrrad-Schaltmechanismus nach einem der Ansprüche 1 bis 9, ferner umfassend ein Vorspannelement (61), das funktionell mit dem Seilanzugselement (42) verbunden ist, um eine Vorspannkraft in einer ersten Drehrichtung an das Seilanzugselement (42) anzulegen, wobei das erste und das zweite bewegliche Positionierelement (51, 52) selektiv mit dem ersten und zweiten verzahnten Segment (53a, 54a) in Eingriff sind, um die Drehung in der ersten Drehrichtung gegen die Vorspannkraft des Vorspannelements (61) zu verhüten.

11. Fahrrad-Schaltmechanismus nach einem der Ansprüche 1 bis 10, ferner umfassend einen Lösehebel (43), der zum Schwenken um eine Schwenkachse konfiguriert und angeordnet ist, die von der Drehachse des Seilanzugselements (42) versetzt ist, so dass der Lösehebel (43) aus einer Ruheposition schwenkt, um das erste und das zweite bewegliche Positionierelement (51, 52) zu betätigen.

12. Fahrrad-Schaltmechanismus nach einem der Ansprüche 1 bis 11, ferner umfassend einen Anzugshebel (47) mit einer Anzugsklinke (48), die konfiguriert und angeordnet ist, um mit einem dritten verzahnten Segment (54b) in Eingriff zu kommen, das konfiguriert ist, um sich mit dem Seilanzugselement (42) zu bewegen, so dass die Bewegung des Anzugshebels (47) das Seilanzugselement (42) dreht.

13. Fahrrad-Schaltmechanismus nach Anspruch 12, wobei die Anzugsklinke (47[*sic*]) und das dritte verzahnte Segment (54b) eine Gesperreanordnung bilden, wobei der Anzugshebel (47) auf eine Ruheposition vorgespannt ist.

14. Fahrrad-Schaltmechanismus nach Anspruch 12 oder 13, wobei der Anzugshebel (47) zum Schwenken um die Drehachse des Seilanzugselements (42) konfiguriert und angeordnet ist, so dass der Anzugshebel (47) aus einer Ruheposition in Eingriff mit dem dritten verzahnten Segment (54b) schwenkt.

15. Fahrradschaltvorrichtung zum Schalten einer Fahrradgangschaltung, umfassend einen Fahrrad-Schaltmechanismus nach einem der Ansprüche 1 bis 14.

## Revendications

1. Mécanisme de changement de vitesse pour bicyclette comprenant :
- un organe récepteur de fil (42) configuré et agencé pour tourner autour d'un axe de rotation ; et
- un mécanisme de positionnement (49) configuré et agencé pour maintenir sélectivement l'organe récepteur de fil (42) dans l'une d'une pluralité de positions de changement de vitesse prédéterminées,
- le mécanisme de positionnement (49) incluant un premier organe de positionnement mobile (51), un second organe de positionnement mobile (52) séparément mobile par rapport au premier organe de positionnement (51), dans lequel le premier organe de positionnement mobile (51) et le second organe de position mobile (52) peuvent maintenir l'organe récepteur de fil (42) dans une position de changement de vitesse prédéterminée,
- un premier segment denté (53a) configuré pour se déplacer avec l'organe récepteur de fil (42), et un deuxième segment denté (54a) configuré pour se déplacer avec l'organe récepteur de fil (42),
- les premier et second organes de positionnement mobiles (51, 52) étant configurés et agencés pour s'enclencher et se désenclencher en alternance avec l'un des premier et deuxième segments dentés (53a, 54a), respectivement, à mesure que les premier et second organes de positionnement mobiles (51, 52) sont déplacés pour réaliser une opération de changement de vitesse entre des positions de changement de vitesse séquentielles des positions de changement de vitesse prédéterminées, **caractérisé en ce que** le second organe de positionnement mobile (52) peut maintenir l'organe récepteur de fil (42) dans une position de changement de vitesse prédéterminée.

2. Mécanisme de changement de vitesse pour bicyclette selon la revendication 1, dans lequel
les premier et second organes de positionnement mobiles (51, 52) incluent des cliquets de positionnement montés en pivotement qui s'enclenchent et se désenclenchent en alternance avec l'un des premier et deuxième segments dentés (53a, 54a), respectivement, pour former un agencement de rochet entre eux.

3. Mécanisme de changement de vitesse pour bicyclette selon la revendication 1 ou 2, dans lequel
le premier segment denté (53a) se trouve dans un premier plan et le deuxième segment denté (54a) se trouve dans un second plan qui est décalé de et parallèle au premier plan.

4. Mécanisme de changement de vitesse pour bicyclette selon l'une quelconque des revendications 1 à 3, dans lequel
les premier et second organes de positionnement mobiles (51, 52) sont sollicités vers des positions d'enclenchement permettant de maintenir l'organe récepteur de fil (42) dans l'une d'une pluralité de positions de changement de vitesse prédéterminées.

5. Mécanisme de changement de vitesse pour bicyclette selon l'une quelconque des revendications 1 à 4, comprenant en outre
un mécanisme de libération configuré et agencé pour déplacer en alternance les premier et second organes de positionnement mobiles (51, 52) de telle sorte que les premier et second organes de positionnement mobiles (51, 52) soient enclenchés et désenclenchés en alternance avec l'un des premier et deuxième segments dentés (53a, 54a), respectivement.

6. Mécanisme de changement de vitesse pour bicyclette selon la revendication 5, dans lequel
le mécanisme de libération inclut une première roue à rochet (45) agencée de façon opérationnelle pour déplacer le premier organe de positionnement mobile (51) entre une position d'enclenchement et une position de désenclenchement, et une seconde roue à rochet (46) agencée de façon opérationnelle pour déplacer le second organe de positionnement mobile (52) entre une position d'enclenchement et une position de désenclenchement.

7. mécanisme de changement de vitesse pour bicyclette selon la revendication 6, dans lequel
le mécanisme de libération inclut un levier de libération (43) avec un cliquet d'entraînement (48) qui est configuré et agencé pour actionner en alternance les première et seconde roues à rochet (45, 46).

8. Mécanisme de changement de vitesse pour bicyclette selon la revendication 6 ou 7, dans lequel
le mécanisme de libération inclut un levier de libération (43) qui est configuré et agencé pour pivoter autour d'un axe de pivotement qui est décalé de l'axe de rotation de l'organe récepteur de fil (42).

9. Mécanisme de changement de vitesse pour bicyclette selon la revendication 7 ou 8, dans lequel
le levier de libération (43) est configuré et agencé pour libérer sélectivement l'organe récepteur de fil (42) pour amener l'organe récepteur de fil (42) à tourner d'une position de changement de vitesse des positions de changement de vitesse prédéterminées lorsque le levier de libération (43) est déplacé d'une position de repos d'une première quantité prédéterminée et pour amener l'organe récepteur de fil (42) à se déplacer de deux positions de changement de vitesse consécutives des positions de changement de vitesse prédéterminées lorsque le levier de libération (43) est déplacé d'une position de repos d'une seconde quantité prédéterminée en une seule opération de changement de vitesse.

10. Mécanisme de changement de vitesse pour bicyclette selon l'une quelconque des revendications 1 à 9, comprenant en outre
un organe de sollicitation (61) couplé de manière opérationnelle à l'organe récepteur de fil (42) pour appliquer une force de poussée sur l'organe récepteur de fil (42) dans un premier sens de rotation, les premier et second organes de positionnement mobiles (51, 52) enclenchant sélectivement les premier et deuxième segments dentés (53a, 54a) pour empêcher une rotation dans le premier sens de rotation contre la force de poussée de l'organe de sollicitation (61).

11. Mécanisme de changement de vitesse pour bicyclette selon l'une quelconque des revendications 1 à 10, comprenant en outre
un levier de libération (43) configuré et agencé pour pivoter autour d'un axe de pivotement qui est décalé de l'axe de rotation de l'organe récepteur de fi (42) de telle sorte que le levier de libération (43) pivote d'une position de repos pour actionner les premier et second organes de positionnement mobiles (51, 52).

12. Mécanisme de changement de vitesse pour bicyclette selon l'une quelconque des revendications 1 à 11, comprenant en outre
un levier d'enroulement (47) avec un cliquet d'enroulement (48) qui est configuré et agencé pour enclencher un troisième segment denté (54b) configuré pour se déplacer avec l'organe de récepteur de fil (42) de telle sorte qu'un mouvement du levier d'enroulement (47) fait tourner l'organe récepteur de fil (42).

13. Mécanisme de changement de vitesse pour bicyclette selon la revendication 12, dans lequel
le cliquet d'enroulement (47) et le troisième segment denté (54b) forment un agencement de rochet avec le levier d'enroulement (47) sollicité vers une position de repos.

14. Mécanisme de changement de vitesse pour bicyclette selon la revendication 12 ou 13, dans lequel
le levier d'enroulement (47) est configuré et agencé pour pivoter autour de l'axe de rotation de l'organe récepteur de fil (42) de telle sorte que le levier d'enroulement (47) pivote d'une position de repos pour enclencher le troisième segment (54b).

15. Dispositif de commande de bicyclette permettant d'opérer des changements de vitesse sur une transmission de bicyclette comprenant un mécanisme de changement de vitesse pour bicyclette selon l'une quelconque des revendications 1 à 14.
